# EUROPÄISCHE PATENTANMELDUNG

(11) **EP 0 715 112 A2**
(43) Veröffentlichungstag der Anmeldung: **05.06.1996**
(21) Anmeldenummer: 95116833.5
(22) Anmeldetag: 26.10.1995
(51) Int. Cl.: F16L 41/03

(54) **Einrichtung zum Zusammenschalten mehrerer Elektromagnetventile**

(30) Priorität: 03.12.1994 DE 4443081
(71) Anmelder: A. und K. MÜLLER GmbH & Co. KG, D-40593 Düsseldorf (DE)
(72) Erfinder: Klebe, Herbert, D-53797 Lohmar (DE); Moldenhauer, Hermann, D-40625 Düsseldorf (DE); Riedel, Heinz-Dieter, D-40593 Düsseldorf (DE); Schumacher, Hans-Werner, D-42781 Haan (DE)
(74) Vertreter: Feder, Wolf-Dietrich, Dr. Dipl.-Phys.

(57) **Zusammenfassung**

Eine Einrichtung zum Zusammenschalten mehrerer Elektromagnetventile in Serien- und/oder Parallelschaltung mit einem Verteilerstück (1), das Anschlußöffnungen aufweist, an welche die Ein/Ausgänge von Elektromagnetventilen (V1 bis V6) angeschlossen sind. Das Verteilerstück ist aus in einem Baukastensystem in unterschiedlicher Weise zusammensetzbaren Einzelelementen (1.1, 1.2, 1.3) aufgebaut. Das Baukastensystem weist Einzelelemente mit zwei Ein/Austrittsöffnungen auf, die entweder einen geradlinigen oder einen abgewinkelten Durchtrittskanal besitzen, sowie Einzelelemente (1.1 bis 1.3) mit drei Ein/Austrittsöffnungen die T-förmig aneinander anschließende Durchtrittskanäle besitzen und Einzelelemente mit vier Ein/Austrittsöffnungen, die sich kreuzende Durchtrittskanäle besitzen. An die vom Verteilerstück (1) abgewandten Anschlüsse der Elektromagnetventile (V1 bis V4) sind zusätzliche Einzelelemente (2.1 bis 2.4) anschließbar, die eine Schlauchtülle besitzen. Die Verbindungen zwischen den das Verteilerstück (1) zusammensetzenden Einzelelementen können als unlösbare Verbindungen ausgestaltet sein, während die Verbindungen zwischen dem Verteilerstück (1) und den angeschlossenen Elektromagnetventilen (V1 bis V6) als lösbare Verbindungen ausgebildet sein können.

## Beschreibung

Die Erfindung betrifft eine Einrichtung zum Zusammenschalten mehrerer Elektromagnetventile in Serien- und/oder Parallelschaltung mit einem Verteilerstück, das mit Durchtrittskanälen versehen ist, die in Anschlußöffnungen an der Außenseite des Verteilerstücks münden, wobei an die Anschlußöffnungen jeweils einer der Ein/Ausgänge eines Elektromagnetventils lösbar angeschlossen ist.

Bei modernen Geräten, denen kaltes oder heißes Wasser zugeführt und im Gerät in bestimmter Weise weiterverteilt wird, ist es häufig notwendig, mehrere Elektromagnetventile in einer Ventilkombination in Serien- und/oder Parallelschaltung zusammenzuschalten. Dies wird im allgemeinen mittels eines Verteilerstücks durchgeführt, dessen Anschlußöffnungen und Durchtrittskanäle an die Zahl der benötigten Ventile und deren Einsatzzweck angepaßt ist. Bei einem solchen Aufbau muß eine große Anzahl unterschiedlicher Verteilerstücke vorhanden sein oder hergestellt werden und eine einmal aufgebaute Ventilkombination ist nicht ohne weiteres veränderbar und erweiterbar. Dies ist besonders nachteilig, wenn sich im praktischen Fall der Anwendung einer derartigen Ventilkombination vor Ort, beispielsweise bei einer gewerblichen Waschmaschine beispielsweise aus Platzgründen das Bedürfnis nach einer veränderten Anordnung der Ventile ergibt, oder wenn eine Umrüstung durchgeführt werden soll, also beispielsweise noch ein weiteres Ventil angeschlossen werden soll.

Der Erfindung liegt die Aufgabe zugrunde, eine Einrichtung der eingangs beschriebenen Bauart so auszugestalten, daß eine große Flexibilität und Variabilität in der Anwendung sichergestellt ist und auch Umrüstungen einer Ventilkombination leicht durchgeführt werden können.

Die Lösung dieser Aufgabe geschieht erfindungsgemäß mit den Merkmalen aus dem kennzeichnenden Teil des Patentanspruchs 1. Vorteilhafte Weiterbildungen der erfindungsgemäßen Einrichtung sind in den Unteransprüchen beschrieben.

Der Grundgedanke der Erfindung besteht darin, das Verteilerstück für die Ventilkombination nach einem Baukastensystem aus Einzelelementen zusammenzusetzen. Diese Einzelelemente können in sehr unterschiedlicher Weise in Form von Winkel-, T- und Kreuzstücken mit teils lösbaren, teils unlösbaren Anschlußverbindungen ausgebildet sein, mit deren Hilfe Verteilerstücke sehr unterschiedlicher Bauart zusammengefügt werden können, an die dann die gewünschten Ventile angeschlossen werden. Vorzugsweise werden die das Verteilerstück zusammensetzenden Einzelelemente mit unlösbaren Verbindungen zusammengefügt, während die Einzelventile über lösbare Verbindungen an das Verteilerstück angeschlossen werden. Auf diese Weise kann jede erdenkliche Ventilbaugruppe zusammengestellt werden.

Weiterhin ist es bei dem erfindungsgemäßen System möglich, zusätzliche Einzelelemente vorzusehen, die lösbar mit den Ventilen verbunden werden und die eine Schlauchtülle als lösbare Verbindung aufweisen.

Wie weiter unten anhand von Ausführungsbeispielen näher erläutert wird, dienen zur Verbindung der das Verteilerstück aufbauenden Einzelelemente sowie zum Anschluß der Elektromagnetventile an das Verteilerstück zweckmäßig druckdichte Steck-Einrastverbindungen, die im wesentlichen ähnlich aufgebaut sein können und als lösbare oder unlösbare Verbindungen ausgestaltet werden. Dabei ist es besonders vorteilhaft, wenn diese Steck-Einrastverbindungen so ausgebildet sind, daß die das Verteilerstück zusammensetzenden Einzelelemente und auch die an das Verteilerstück anzuschließende Ventile in unterschiedlicher Winkelstellung um die axiale Richtung herum ineinander steckbar sind und dann in der eingesteckten Stellung unverdrehbar einrasten. Auf diese Weise sind sehr variable räumliche Anordnungen herstellbar.

Im folgenden wird anhand der beigefügten Zeichnungen ein Ausführungsbeispiel für eine Einrichtung nach der Erfindung näher erläutert.

In den Zeichnungen zeigen:
Fig. 1 eine Ventilkombination aus einem Verteilerstück und 6 Elektromagnetventilen in einer schematisch dargestellten Draufsicht;
Fig. 2A bis 2C die das Verteilerstück nach Fig. 1 zusammensetzenden Einzelelemente;
Fig. 2D bis 2I weitere Einzelelemente zum Aufbau oder zur Erweiterung von Verteilerstücken;
Fig. 3A bis 3N in leicht verkleinertem Maßstab zusätzliche Einzelelemente unterschiedlicher Bauart zum Aufbau und zur Erweiterung von Verteilerstücken;
Fig. 4 das Einzelelement nach Fig. 2A in leicht vergrößerter geschnittener Darstellung;
Fig. 5 eine Klammer zur Erzeugung einer lösbaren Verbindung mittels des Einzelelementes nach Fig. 4;
Fig. 6 ein Verteilerstück aus Einzelelementen nach Fig. 2A und Fig. 3D;
Fig. 7 ein Verteilerstück aus Einzelelementen nach Fig. 3E und Fig. 3F.

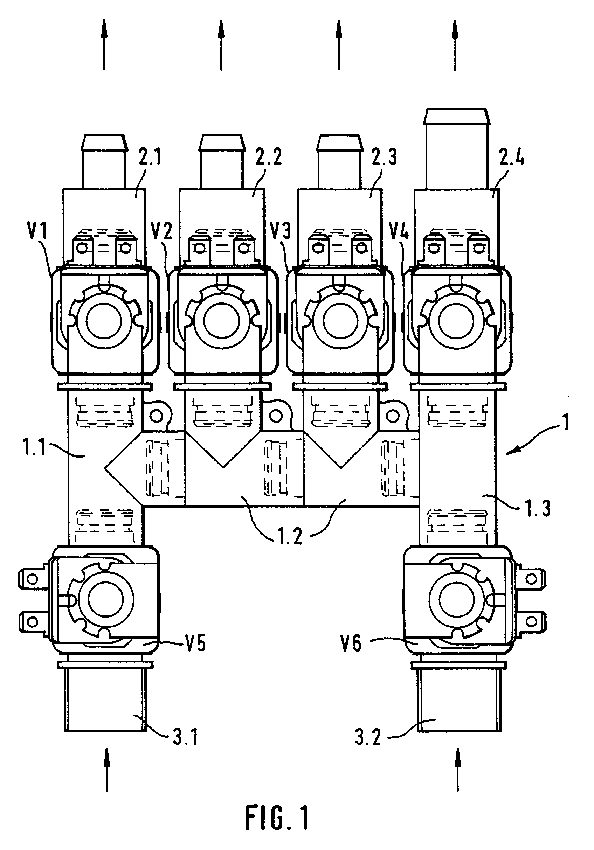

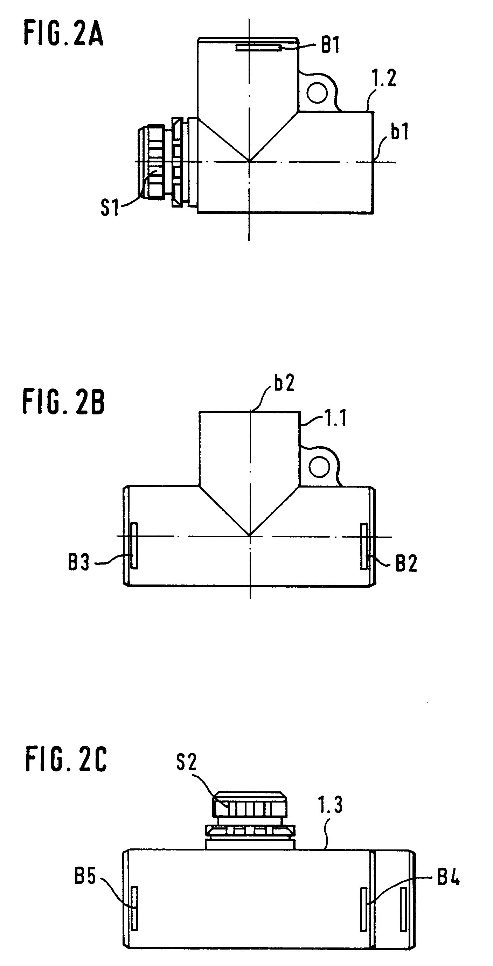

Fig. 1 zeigt eine Ventilkombination mit einem Verteilerstück 1, an welches 6 Elektromagnetventile V1 bis V6 angeschlossen sind. Das Verteilerstück 1 ist aus insgesamt 4 Einzelelementen zusammengesetzt, die in den Fig. 2A bis 2C dargestellt sind. Diese Einzelelemente sind als T-Stücke aufgebaut und über unlösbare Steck-Einrastverbindungen zusammengefügt.

Zum besseren Verständnis der Fig. 2A und folgende wird bezüglich der Steck-Rastverbindungen folgendes festgehalten. Die Steck-Rastverbindungen sind, wie weiter unten noch im einzelnen erläutert wird, so aufgebaut, daß jeweils im Bereich der Ein/Austrittsöffnungen der Einzelelemente steckerartige bzw. buchsenartige Verbindungsteile angeordnet sind, die beim Zusammensetzen ineinandergreifen. Die steckerartigen Verbindungsteile sind durchgehend jeweils mit S1 bis S22 bezeichnet. Buchsenartige Verbindungsteile für eine lösbare Verbindung sind durchweg mit B1 bis B28 bezeichnet, während buchsenartige Verbindungsteile für eine nicht lösbare Verbindung mit b1 bis b17 bezeichnet sind. Die steckerartigen Verbindungsteile S1 bis S22 können also jeweils mit buchsenartigen Verbindungsteilen für eine lösbare Verbindung oder buchsenartigen Verbindungsteilen für eine unlösbare Verbindung zusammenwirken.

Fig. 2a zeigt ein Einzelelement als T-Stück mit einem steckerartigen Verbindungsteil S1, einem buchsenartigen Verbindungsteil B1 für eine lösbare Verbindung und einem buchsenartigen Verbindungsteil b1 für eine unlösbare Verbindung. Der Aufbau der Einzelelemente 1.1 nach Fig. 2B sowie 1.3 nach Fig. 2C ist aus den Figuren leicht abzulesen. Für die in Fig. 1 dargestellte Ventilkombination ergibt sich, daß das Verteilerstück 1 aus einem Einzelelement 1.1, zwei Einzelelementen 1.2 und einem Einzelelement 1.3 aufgebaut ist. Es läßt sich leicht erkennen, daß die Einzelelemente untereinander über unlösbare Verbindungen miteinander verbunden sind, während die Ventile V1 bis V6 über lösbare Verbindungen angeschlossen sind. Weiterhin sind jeweils an die vom Verteilerstück 1 abgewandten Anschlüsse der Ventile V1 bis V4 Einzelelemente 2.1 bis 2.4 über lösbare Steck-Einrastverbindungen angeschlossen, die jeweils an ihrer Außenseite eine Schlauchtülle zum Anschluß eines Schlauches aufweisen. Zuleitungen 3.1 und 3.2 sind an die Einlaßventile V5 und V6 angeschlossen.

Die in Fig. 1 dargestellte Ventilkombination kann beispielsweise in einen Waschautomaten eingebaut sein, wobei die an die Einzelelemente 2.1 bis 2.4 angeschlossenen Schläuche mit den Wasserzuläufen und den verschiedenen Einspülkammern in nicht dargestellter Weise verbunden sind.

Die in Fig. 1 dargestellte Ventilkombination hat im praktischen Gebrauch den Vorteil, daß es leicht und ohne Werkzeug möglich ist, den Austausch eines Ventils vorzunehmen. Das mühsame Lösen der Verbindungsschläuche ist nicht mehr erforderlich, weil auch diese in einer lösbaren Verbindung an die Ventile angesteckt sind.

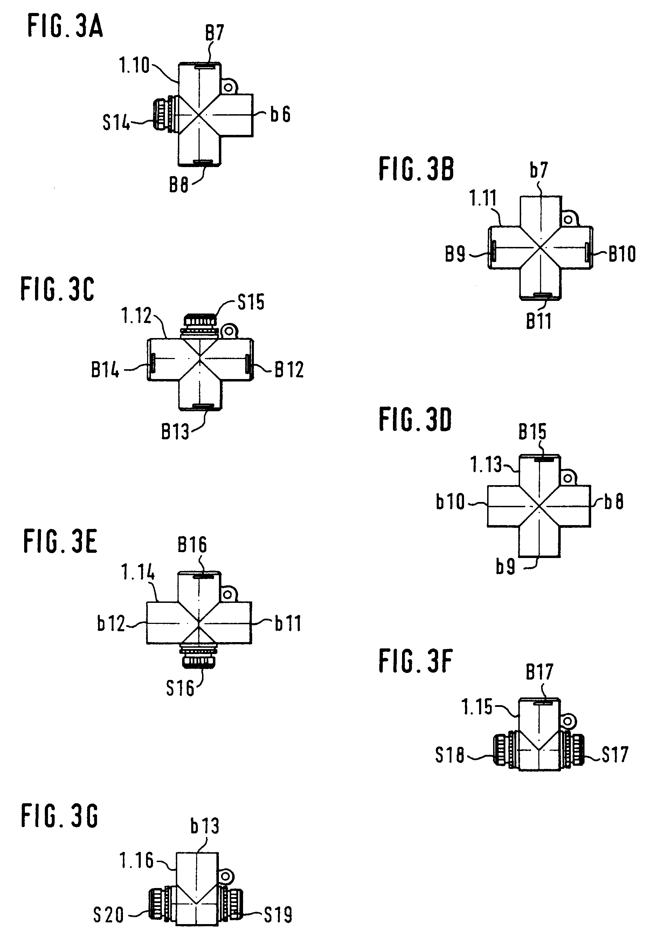

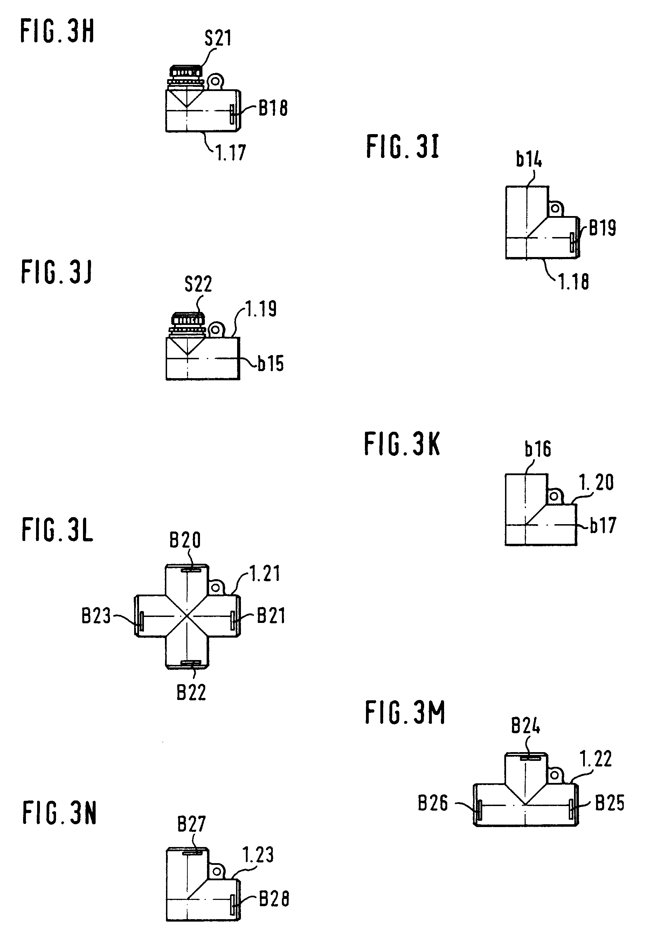

In den Fig. 2D bis 2I sowie 3A bis 3N sind weitere Typen von Einzelelementen dargestellt und es ist ersichtlich, daß hier eine große Variationsbreite besteht. Aus den Einzelelementen können sehr unterschiedliche Verteilerstücke zusammengesetzt werden. Es ist auch möglich, Einzelelemente innerhalb der Verteilerstücke über lösbare Steck-Einrastverbindungen miteinander zu verbinden, so daß auch ein Verteilerstück nachträglich verändert oder erweitert werden kann.

Die Ausbildungen der weiteren Einzelelemente werden im folgenden kurz zusammengestellt:
- Fig. 2D:: Winkelstück 1.4 mit zwei steckerartigen Verbindungsteilen S3 und S4;

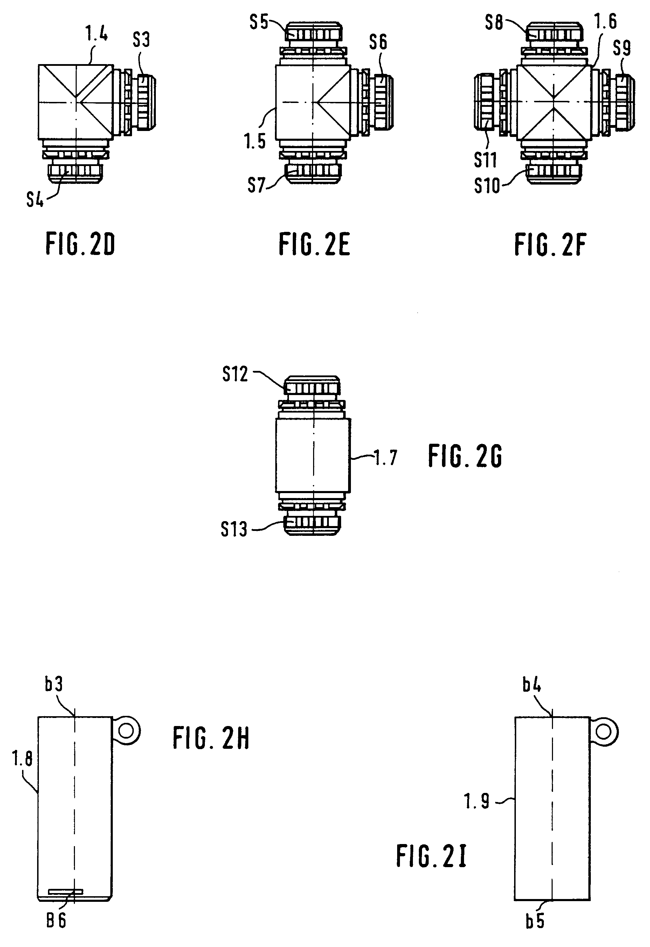

- Fig. 2E:: T-Stück 1.5 mit drei steckerartigen Verbindungsteilen S5 bis S7;
- Fig. 2F:: Kreuz-Stück 1.6 mit vier steckerartigen Verbindungsteilen S8 bis S11;
- Fig. 2G:: gerades Stück 1.7 mit zwei steckerartigen Verbindungsteilen S12 und S13;
- Fig. 2H:: gerades Stück 1.8 mit einem buchsenartigen lösbaren Verbindungsteil B6 und einem buchsenartigen unlösbaren Verbindungsteil b3;
- Fig. 2I:: gerades Stück 1.9 mit zwei buchsenartigen unlösbaren Verbindungsteilen b4 und b5;
- Fig. 3A:: Kreuzstück 1.10 mit einem steckerartigen Verbindungsteil S14, zwei lösbaren buchsenartigen Verbindungsteilen B7 und B8 und einem unlösbaren buchsenartigen Verbindungsteil b6;
- Fig. 3B:: Kreuzstück 1.11 mit drei lösbaren buchsenartigen Verbindungsteilen B9 bis B11 und einem unlösbaren buchsenartigen Verbindungsteil b7;
- Fig. 3C:: Kreuzstück 1.12 mit einem steckerartigen Verbindungsteil S15 sowie drei lösbaren buchsenartigen Verbindungsteilen B12 bis B14;
- Fig. 3D:: Kreuzstück 1.13 mit einem buchsenartigen lösbaren Verbindungsteil B15 sowie drei unlösbaren buchsenartigen Verbindungsteilen b8 bis b10;
- Fig. 3E:: Kreuzstück 1.14 mit einem steckerartigen Verbindungsteil S16, einem lösbaren buchsenartigen Verbindungsteil B16 und zwei unlösbaren buchsenartigen Verbindungsteilen b11 und b12;
- Fig. 3F:: T-Stück 1.15 mit zwei steckerartigen Verbindungsteilen S17 und S18 und einem lösbaren buchsenartigen Verbindungsteil B17;
- Fig. 3G:: T-Stück 1.16 mit zwei steckerartigen Verbindungsteilen S19 und S20 und einem unlösbaren buchsenartigen Verbindungsteil b13;
- Fig. 3H:: Winkelstück 1.17 mit einem steckerartigen Verbindungsteil S21 und einem lösbaren buchsenartigen Verbindungsteil B18;
- Fig. 3I:: Winkelstück 1.18 mit einem lösbaren buchsenartigen Verbindungsteil B19 und einem unlösbaren buchsenartigen Verbindungsteil b14;
- Fig. 3J:: Winkelstück 1.19 mit einem steckerartigen Verbindungsteil S22 und einem unlösbaren buchsenartigen Verbindungsteil b15;
- Fig. 3K:: Winkelstück 1.20 mit zwei unlösbaren buchsenartigen Verbindungsteilen b16 und b17;
- Fig. 3L:: Kreuzstück 1.21 mit vier lösbaren buchsenartigen Verbindungsteilen B20 bis B23;
- Fig. 3M:: T-Stück 1.22 mit drei lösbaren buchsenartigen Verbindungsteilen B24 bis B26;
- Fig. 3N:: Winkelstück 1.23 mit zwei buchsenartigen lösbaren Verbindungsteilen B27 und B28.

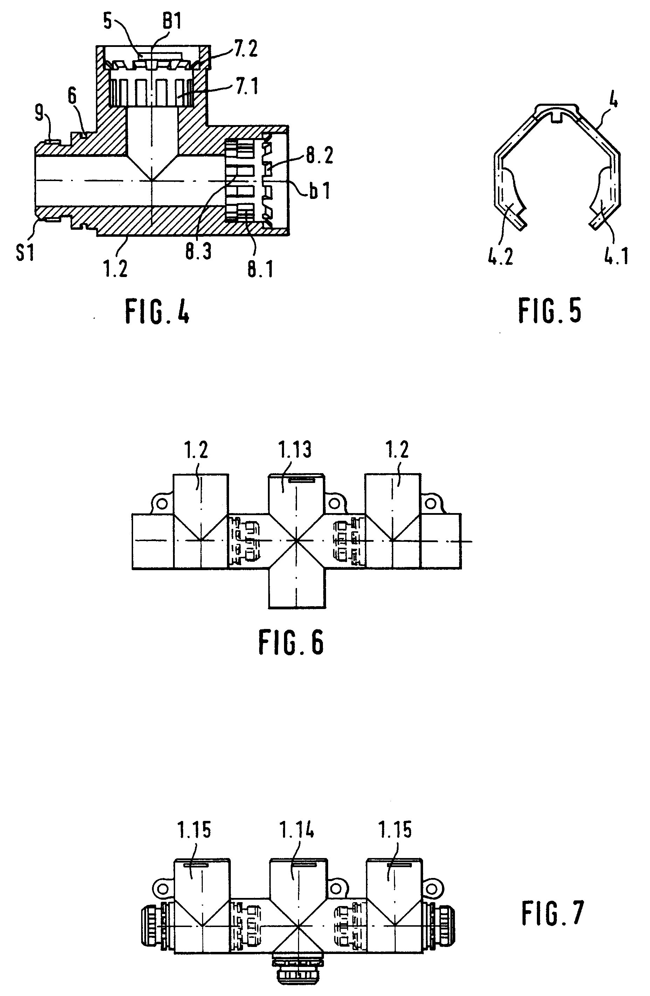

Im folgenden wird anhand der Fig. 4 und 5 die Ausbildung der Steck-Einrastverbindung zwischen den Einzelelementen bzw. dem Verteilerstück und den Ventilen näher erläutert.

Fig. 4 zeigt in einer schnittdarstellung das T-Stück 1.2 gemäß Fig. 2A. Selbstverständlich sind die nachfolgenden Ausführungen über die genauere Ausbildung der steck-Einrastverbindung auch auf alle anderen dargestellten Einzelelemente übertragbar.

Das lösbare buchsenartige Verbindungsteil B1 ist eine Buchse, die an der äußeren Mantelfläche zwei in Umfangsrichtung verlaufende Schlitze 5 aufweist. An der Innenseite der Buchse sind Führungsrippen 7.1 und Rastelemente 7.2 in Umfangsrichtung rasterartig mit einem Winkelabstand von etwa 15° angeordnet. Ähnliche Rippen 9 befinden sich an der Außenseite des steckerartigen Verbindungsteils S1 (siehe auch Fig. 2A). Es ist aus Fig. 4 ohne weiteres ersichtlich, daß ein steckerartiges Verbindungsteil analog S1 in unterschiedlichen Winkelstellungen um die axiale Richtung herum in ein lösbares buchsenartiges Verbindungsteil B1 eingesteckt werden kann. Dabei greifen die Rippen 9 am steckerartigen Verbindungsteil zwischen die Rippen 7.1 am buchsenartigen Verbindungsteil ein. Nach dem Zusammenstecken wird auf die äußere Mantelfläche des buchsenartigen Verbindungsteils B1 eine aus Kunststoff bestehende Klammer 4 aufgesteckt, die in Fig. 5 dargestellt ist und die an ihrer Innenseite Verriegelungselemente 4.1 und 4.2 aufweist, welche durch die Schlitze 5 hindurchgreifen und in eine Umfangsnut 6 am steckerartigen Verbindungsteil eingreifen. Nach dem Aufsetzen der Klammer 4 ist also die Verbindung eingerastet und kann durch Entfernen der Klammer 4 wieder gelöst werden.

Das unlösbare buchsenartige Verbindungsteil b1 besitzt ebenfalls rasterartig am Umfang angeordnete Rippen 8.1 und Rastelemente 8.2, so daß auch hier ein Einstecken eines steckerartigen Verbindungsteils analog S2 in unterschiedlichen Winkelstellungen entsprechend einem Raster mit ebenfalls 15° Winkelabstand eingesteckt werden kann, wobei wiederum die Rippen 9 zwischen die Rippen 8.1 eingreifen. Bei dieser Verbindungsart besitzen die Rippen 8.1 Hinterschneidungen 8.3. Nach dem Einstecken des steckerartigen Verbindungsteils S1 rasten die rippenartigen Vorsprünge 9 hinter die Hinterschneidungen 8.3 ein, so daß eine unlösbare Verbindung entsteht.

In den Fig. 6 und 7 sind weitere Möglichkeiten der Zusammensetzung eines Verteilerstücks aus mehreren Einzelelementen dargestellt.

Gemäß Fig. 6 bilden die Einzelelemente 1.2 (Fig. 2A) zusammen mit dem Einzelelement 1.13 (Fig. 3D) ein Verteilerstück mit drei lösbaren buchsenartigen Verbindungsteilen und drei unlösbaren buchsenartigen Verbindungsteilen an den äußeren Anschlüssen.

Gemäß Fig. 4 bilden zwei Einzelelemente 1.15 (Fig. 3F) zusammen mit einem Einzelelement 1.14 (Fig. 3E) ein Verteilerstück mit drei lösbaren buchsenartigen Verbindungsteilen und drei steckerartigen Verbindungsteilen an den Außenanschlüssen.

Die Abdichtungen im Bereich der Steck-Einrastverbindungen kann in nicht eigens dargestellter Weise über O-Ringe erfolgen.

Es wird noch darauf hingewiesen, daß es möglich ist, mit der beschriebenen Einrichtung durch entsprechende Ausbildung und Zusammensetzung der Einzelelemente des Verteilerstücks unterschiedliche Medienströme, z.B. heißes und kaltes Wasser, normales und entmineralisiertes Wasser usw. vollständig getrennt, aber über eine Baugruppe einem Verbraucher zuzuführen.

## Patentansprüche

1. Einrichtung zum Zusammenschalten mehrerer Elektromagnetventile in Serien- und/oder Parallelschaltung mit einem Verteilerstück, das mit Durchtrittskanälen versehen ist, die in Anschlußöffnungen an der Außenseite des Verteilerstücks münden, wobei an die Anschlußöffnungen jeweils einer der Ein/Ausgänge eines Elektromagnetventils angeschlossen ist, dadurch gekennzeichnet, daß das Verteilerstück (1) aus mehreren in einem Baukastensystem in unterschiedlicher Weise zusammensetzbaren Einzelelementen (1.1 bis 1.23) aufgebaut ist, die jeweils Durchtrittskanäle aufweisen, welche in Ein/Austrittsöffnungen an der Außenseite des Einzelelements münden, wobei die Einzelelemente so zusammensetzbar und miteinander verbindbar sind, daß in ihren aneinander angrenzenden Bereichen jeweils eine Ein/Austrittsöffnung eines Einzelelements einer Ein/Austrittsöffnung eines anderen Einzelelements gegenüberliegt und das Baukastensystem Einzelelemente mit zwei Ein/Austrittsöffnungen, die entweder einen geradlinigen oder einen abgewinkelten Durchtrittskanal besitzen, und Einzelelemente mit drei Ein/Austrittsöffnungen, die T-förmig aneinander anschließende Durchtrittskanäle besitzen, sowie Einzelelemente mit vier Ein/Austrittsöffnungen, die sich kreuzende oder aneinander vorbeigeführte Durchtrittskanäle besitzen, aufweist.

2. Einrichtung nach Anspruch 1, dadurch gekennzeichnet, daß mindestens ein Teil, der ein bestimmtes Verteilerstück (1) aufbauenden Einzelelemente (1.1, 1.2, 1.3) bei oder nach dem Zusammensetzen unlösbar miteinander verbunden sind.

3. Einrichtung nach Anspruch 1 oder 2, dadurch gekennzeichnet, daß die Einzelelemente in einer druckdichten Steck-Einrastverbindung (S1-b1; S1-B1) miteinander verbindbar sind.

4. Einrichtung nach Anspruch 3, dadurch gekennzeichnet, daß die Elektromagnetventile (V1 bis V6) an das zusammengesetzte Verteilerstück (1) in einer druckdichten lösbaren Steck-Einrastverbindung (S1-B1) anschließbar sind.

5. Einrichtung nach Anspruch 3 oder 4, dadurch gekennzeichnet, daß die Steck-Einrastverbindung durch steckerartige und buchsenartige, miteinander zusammenwirkende Verbindungsteile (S1 bis S22; B1 bis B28; b1 bis b17) gebildet wird, die jeweils im Bereich der Ein-Austrittsöffnungen der Einzelelemente und im Bereich der Ein/Ausgänge der Elektromagnetventile angeordnet sind.

6. Einrichtung nach Anspruch 5, dadurch gekennzeichnet, daß jedes Einzelelement eine vorgegebene Anzahl von steckerartigen Verbindungsteilen (S1 bis S22) und/oder buchsenartigen Verbindungsteilen (b1 bis b17) für eine unlösbare Steck-Einrastverbindung und/oder buchsenartige Verbindungsteile (B1 bis B28) für eine lösbare Steck-Einrastverbindung aufweist.

7. Einrichtung nach Anspruch 6, dadurch gekennzeichnet, daß die an das Verteilerstück (1) anzuschließenden Elektromagnetventile (V1 bis V6) jeweils mindestens ein steckerartiges Verbindungsteil aufweisen.

8. Einrichtung nach Anspruch 5 und 6, dadurch gekennzeichnet, daß die unlösbaren steck-Einrastverbindungen durch in den buchsenartigen Verbindungsteilen (b1) angeordnete Verriegelungselemente (8.1) erzeugt werden, die über Hinterschneidungen (8.3) mit entsprechenden Gegenelementen (9) an den steckerartigen Verbindungsteilen (S1) zusammenwirken.

9. Einrichtung nach Anspruch 5 und 6, dadurch gekennzeichnet, daß die lösbaren Steck-Einrastverbindungen durch an den steckerartigen Verbindungsteilen (S1) angeordnete Verriegelungselemente erzeugt werden, die mit an einer auf das buchsenartige Verbindungselement aufsteckbaren Klammer (4) angeordneten Gegenelementen (4.1, 4.2) zusammenwirken.

10. Einrichtung nach einem der Ansprüche 5 bis 9, dadurch gekennzeichnet, daß die Steck-Einrastverbindungen so ausgebildet sind, daß die stecker- und buchsenartigen Verbindungsteile (S1-B1; S1-b1) in unterschiedlichen Winkelstellungen um die axiale Richtung herum ineinandersteckbar sind und in der eingesteckten Stellung unverdrehbar einrasten.

11. Einrichtung nach Anspruch 10, dadurch gekennzeichnet, daß die unterschiedlichen Winkelstellungen ein Raster mit vorgegebenen Winkelabständen bilden.

12. Einrichtung nach Anspruch 11, dadurch gekennzeichnet, daß das Raster durch an den steckerartigen und buchsenartigen Verbindungsteilen (S1, B1, b1) in vorgegebenen Winkelabständen angeordnete, in axialer Richtung verlaufende Rippen (7.1, 8.1, 9) und/oder Nuten gebildet wird.

13. Einrichtung nach einem der Ansprüche 4 bis 12 gekennzeichnet durch zusätzliche Einzelelemente (2.1 bis 2.4) mit zwei Ein/Austrittsöffnungen, von denen eine mit einer Steck-Einrastverbindung versehen ist, während die andere einen Schlauchanschluß aufweist und diese zusätzlichen Einzelelemente zum Anschluß an die vom Verteilerstück abgewandten Ein/Ausgänge der Elektromagnetventile (V1 bis V4) vorgesehen sind.
